# EUROPÄISCHE PATENTSCHRIFT

(11) **EP 4 063 988 B1**
(45) Veröffentlichungstag und Bekanntmachung des Hinweises auf die Patenterteilung: **18.09.2024**
(21) Anmeldenummer: 22163567.5
(22) Anmeldetag: 22.03.2022
(51) Int. Cl.: G05D 7/01, G05D 7/00, G05D 16/20, F16K 1/00

(54) **DIFFUSOR MIT DRUCKREGELEIGENSCHAFT**
DIFFUSOR WITH PRESSURE CONTROL PROPERTY
DIFFUSEUR AVEC RÉGULATION DE PRESSION

(30) Priorität: 23.03.2021 DE 102021107202
(43) Veröffentlichungstag der Anmeldung: 28.09.2022
(73) Patentinhaber: ebm-papst Landshut GmbH, 84030 Landshut (DE)
(72) Erfinder: Georgi, Plamen, 84032 Altdorf (DE); Stolz, Sebastian, 84030 Ergolding (DE)
(74) Vertreter: Otten, Roth, Dobler & Partner mbB Patentanwälte

(56) Entgegenhaltungen:
- EP-A1- 3 026 313
- DE-A1- 102012 102 646
- US-A1- 2017 211 481

## Beschreibung

### Stand der Technik:

Aus dem Stand der Technik, insbesondere aus der DE 10 2012 102 646 A1 oder der DE 10 2018 102 886 A1 der Anmelderin sind Gasregelventile und Gasregelventilanordnungen bekannt, welche eine präzise Volumenstromregelung eines Gasstroms erlauben. Hinsichtlich der Funktionsweise derartiger Gasregelventile bzw. Gasregelventilanordnungen wird auf diese Offenlegungsschriften Bezug genommen und deren Inhalte im Umfang der Figurenbeschreibung und der Figuren werden durch Einbezug mittels Verweis zur Offenbarung dieser Patentanmeldung gemacht.

Darüber hinaus offenbart das Dokument EP 3 026 313 A1 ein Steuerventil zur Steuerung des Flüssigkeitsstroms, umfassend: einen Sitzteil, durch den das Fluid fließt; einen Tellerventilabschnitt, der so konfiguriert ist, dass er sich relativ zu dem Sitzabschnitt bewegt; einen Führungszylinderabschnitt, der so konfiguriert ist, dass er das Fluid, das durch den Sitzabschnitt hindurchgetreten ist, an einer inneren Umfangsfläche desselben führt; einen Tellerventilführungsabschnitt, der in Gleitkontakt mit der inneren Umfangsfläche des Führungszylinderabschnitts steht und den Tellerventilabschnitt trägt; und einen Gleichrichtungsschlitz, der auf mindestens einer der inneren Umfangsfläche des Führungszylinderabschnitts und einer äußeren Umfangsfläche des Tellerventilabschnitts ausgebildet ist.

Weiterhin offenbart das Dokument US 2017/0211481 A1 ein Durchflussregelventil unter anderem umfassend einen Ventilkörper mit einem inneren Strömungskanal, der eine um eine Einlassachse ausgerichtete Einlassöffnung, eine Ventilverengung, einen gekrümmten Einlasskanal zwischen der Einlassöffnung und der Ventilverengung, eine um eine Auslassachse ausgerichtete Auslassöffnung und einen Auslasskanal zwischen der Ventilverengung und der Auslassöffnung umfasst, wobei der innere Strömungskanal einen Strömungsweg zwischen der Einlassöffnung und der Auslassöffnung bildet.

Außerdem offenbart das Dokument DE 10 2012 102 646 A1 ein Gasregelventil für die Regelung einer einem Gasbrenner zuzuführenden Gasmenge mit einem Direktdruckregler, der einen durch einen elektronisch geregelten Schrittmotor bewegbaren Ventilkörper aufweist.

### Aufgabe und Vorteile der Erfindung:

Bei Gasregelventilen ist stets das Bestreben gegeben, die Druckregeleigenschaften und Durchflusskapazitäten zu optimieren und auftretende Sekundäreffekte, wie z.B. Geräuschbildung durch periodische Druckschwankungen zu vermeiden. Um diese Eigenschaften zu verbessern ist eine präzise Abstimmung des Regelsystems eines Gasregelventils, insbesondere bei kleinen Öffnungsquerschnitten und zunehmenden Volumenströmen notwendig.

Ausgehend von einem Gasregelventil nach dem Stand der Technik wird die Verbesserung der Druckregeleigenschaften durch ein Gasregelventil nach den Merkmalen des Anspruchs 1 erzielt. Vorteilhafte Weiterbildungen und zweckmäßige Ausgestaltungen sind durch die abhängigen Ansprüche gegeben.

Ein Diffusor im Sinne der Erfindung ist dabei ein Bauteil, welches durch seine Geometrie, bei gegebener Strömung eines Gases, den Strömungsquerschnitt entlang der Strömungsrichtung vergrößert. Durch die Querschnittsveränderung wird hinter dem Diffusor ein Unterdruck erzeugt, welcher auf bewegliche Bauteile einwirkt.

Das Querschnittsverhalten im Sinne der Erfindung ist der Verlauf des Querschnitts der Öffnung zwischen dem Ventilsitz und dem Ventilkörper, welcher den, für die Durchströmung mit Gas, zur Verfügung stehenden Querschnitt ausbildet.

Zur Lösung der Aufgabe wird ein Gasstromregelventil vorgeschlagen, wobei das Gasstromregelventil ein Gehäuse mit einem Gaseinlass, ein in dem Gehäuse angeordneten Ventilsitz, ein dem Ventilsitz zugeordneten Ventilkörper, wobei der Ventilkörper von einer oberen Feder und einer unteren Feder gehalten und mittels einer Membran zentriert ist, sowie einen dem Ventilkörper nachgelagerten, in dem Gehäuse vorgesehenen Gasauslass umfasst. Der Ventilkörper ist dabei in dem Ventilsitz zur Ausbildung eines regelbaren Querschnitts einer Durchtrittsöffnung für den Gasdurchtritt in einer ersten Bewegungsrichtung beweglich angeordnet. Vorgesehen ist, dass das Gasstromregelventil einen verstellbaren Diffusor umfasst.

Das Vorsehen eines verstellbaren Diffusors, also eines veränderbaren Verlaufs eines sich öffnenden Querschnitts in der Durchtrittsöffnung bewirkt eine dadurch gegebene Druckregelung mit einer homogeneren Durchströmung des Ventils und damit einhergehender Kapazitätserhöhung.

Es ist überdies vorgesehen, dass an dem Ventilsitz am Grenzbereich zu der Durchtrittsöffnung mindestens eine Bypassgeometrie ausgebildet ist.

Im geschlossenen Zustand des Ventils wird für verschiedene Anwendungen ein definierter Durchfluss benötigt, z.B. bei einer Leckageprüfung oder wenn der Raum vor dem Regelventil gespült werden soll, wie beispielsweise bei einer Valve-Proof-System-Prüfung. Um einen "Blendeneffekt" zu verhindern, welcher bei steigendem Druck größere Durchflüsse zur Folge hat, wird der kleinste Querschnitt, z.B. durch eine Anlagefläche zwischen Ventilkörper und Ventilsitz, nicht verschlossen. Infolge der Ausbildung am Grenzbereich der Durchtrittsöffnung wird der Bypass unter dem Teillastbereich definiert, ohne weiteren Einfluss auf das Regelverhalten zu nehmen.

Bevorzugt ist dabei vorgesehen, dass an dem Ventilsitz im Bereich der Durchtrittsöffnung eine Ventilsitz-Diffusorgeometrie und/oder an dem Ventilkörper im Bereich der Durchtrittsöffnung eine Ventilkörper-Diffusorgeometrie umfasst ist.

Bei bestimmten Durchflussströmungen entsteht je nach Ventilstellung und Betriebsdruck durch eine Anordnung einer Diffusorgeometrie im Bereich des Regelventils eine resultierende Kraft welche das Ventil je nach Durchflussstrom schließt oder öffnet. Dies wirkt sich vorteilhaft auf das Regelverhalten des Gasstromregelventils aus.

Überdies ist bei dem Gasstromregelventil vorgesehen, dass der verstellbare Diffusor sein verstellbares Querschnittsverhalten mittels zweier sich voneinander entfernender Kurven, insbesondere nicht linearer Kurven, bevorzugt überlagert mit einem Offset in Öffnungsrichtung, aufweist.

Das Querschnittsverhalten durch zwei nicht lineare Kurven bewirkt eine besonders gute Strömungsführung und begünstigt dabei die Wirkung des Diffusors auf den Ventilkörper.

Insbesondere ist dazu vorgesehen, dass an dem Ventilsitz, vor der Durchtrittsöffnung eine Einlaufstrecke, bevorzugt in Strömungsrichtung eine gleichförmige Einlaufstrecke, insbesondere eine hohlzylinderförmige Einlaufstrecke ausgebildet ist.

Durch die in Strömungsrichtung gleichförmige Einlaufstrecke wird eine homogenere Anströmung des Regelventils erzeugt, durch welche Strömungsgeräusche reduziert werden und durch gleichmäßigere Durchströmung die Kapazität des Gasventils erhöht wird.

Bevorzugt ist bei dem Gasstromregelventil die Durchtrittsöffnung als Ringspalt ausgebildet, was ebenfalls die homogene Durchströmung begünstigt und eine gleichmäßige Wirkung des Diffusors erlaubt.

In einer bevorzugten Ausführungsform ist vorgesehen, dass die Ventilsitz-Diffusorgeometrie einstückig mit dem Ventilsitz ausgebildet ist.

Auf diese Weise lässt sich die Geometrie definiert und zusätzlich kostengünstig in die Baugruppe bei der Herstellung abstimmen und integrieren.

Ebenso ist in einer bevorzugten weiteren oder ergänzenden Ausführungsform vorgesehen, dass die Ventilkörper-Diffusorgeometrie einstückig mit dem Ventilkörper ausgebildet ist, um die oben genannten Vorteile zu erzielen.

Besonders bevorzugt ist die Ventilsitz-Diffusorgeometrie als Hohlkehle ausgebildet. Durch die Ausbildung als Hohlkehle wird die vorgegebene Strömungsrichtung des Gasstroms durch das Ventil unter Vermeidung von Abrisskanten geführt, was die Durchströmung begünstigt und eine gleichmäßige Wirkung des Diffusors erlaubt.

Überdies ist auch vorgesehen, dass die Ventilkörper-Diffusorgeometrie als Ringsegment, insbesondere mit konvexer Mantelkontur, bevorzugt mit kreisförmiger Mantelkontur ausgebildet ist.

Die Ausbildung als Ringsegment erlaubt die Nutzung unterschiedlicher Abschnitte der Ventilkörper-Diffusorgeometrie, einerseits als Führungselement für die Strömung des Gasstroms, anderseits als Konturelement für die Ausbildung eines sich aufweitenden Querschnittsverlaufs, welcher die Effekte eines Diffusors bereitstellt.

Der beschriebene Verlauf ist insbesondere dadurch vorteilhaft gegeben, dass die Ventilkörper-Diffusorgeometrie mit der Ventilsitz-Diffusorgeometrie in einem in Strömungsrichtung oberen Abschnitt einen Strömungskanal ausbildet und in einem in Strömungsrichtung folgenden unteren Abschnitt eine Aufweitung zwischen den Radien einen Diffusorkanal ausbildet. Wenn der Ventilkörper derart geöffnet ist, dass der "Diffusoreffekt" nachlässt, entsteht in dem Hohlraum unter dem Ventilkörper ein Unterdruck, der den Ventilkörper zusätzlich nach unten zieht. Dies trägt dazu bei, dass die Kapazität erhäht wird und die druckunabhängige Regelung länger fortgesetzt wird.

Der strömungsbegünstigende obere Abschnitt nimmt dabei den Gasstrom in einem Strömungskanal auf und führt diesen unter Vermeidung von Abrisskanten oder Störstellen dem sich aufweitenden unteren Abschnitt als Diffusorkanal zu. Auf diese Weise wird eine gleichmäßige und ungestörte Anströmung des Diffusors erzielt, was die Durchströmung begünstigt und eine gleichmäßige Wirkung des Diffusors erlaubt.

Bevorzugt sind in einer Ausführungsform mehrere in gleichen Abständen umlaufende Bypassgeometrien ausgebildet ist.

In einer weiteren Ausführungsform des Gasstromregelventils ist bevorzugt vorgesehen, dass die Bypassgeometrie einen definierten Durchfluss des Gasstroms bei geschlossenem Gasstromregelventil ermöglicht. Hierdurch kann in vorteilhafter Weise ein Blendeneffekt des Gasstromregelventils vermieden werden.

In einer weiteren Ausführungsform des Gasstromregelventils ist bevorzugt vorgesehen, dass der definierte Durchfluss über eine Toleranzlage von Ventilkörper und Ventilsitz und anteiligem Querschnitt am Umfang einer Anlagekante des Ventilkörpers begrenzt ist. Vorteilhaft ist hierbei, dass auf Grund einer Beweglichkeit wenigstens eines der beiden den Bypass bildenden Elemente, diese im Betrieb des Gasstromregelventils gespült werden, beziehungsweise abgeblasen werden. Hierdurch kann ein Verschmutzen durch Partikel verhindert werden.

In einer weiteren Ausführungsform des Gasstromregelventil ist bevorzugt vorgesehen, dass ein dem Ventilsitz nachgeordneter Führungskorb in dem Gehäuse, bevorzugt an dem Ventilsitz oder einer Federaufnahme ausgebildet ist und an dem Ventilkörper ein Führungsschaft ausgebildet ist, wobei der Führungsschaft in mindestens einem Abschnitt der Führungskorbs linear in Öffnungsrichtung des Ventils geführt ist und insbesondere einen Dämpfer für die Bewegung des Ventilkörpers umfasst.

Das Gasstromregelventil ist ein Feder-Masse-Feder-System und neigt bei bestimmten Betriebsbedingungen zum Schwingen. Bei Schwingungen quer und axial zur Öffnungs- und Schließrichtung berührt der Führungsschaft die Führung und verhindert dadurch die Anregung der Schwingung in Querrichtung und in axialer Richtung. Die Führung verhindert zudem das unerwünschte Auslenken des Regelventils und nimmt keinen Einfluss auf das Regelverhalten. Optional kann das System um einen Luftdämpfer ergänzt werden, wodurch Schwingungen in axialer Richtung reduziert werden können.

In einer weiteren Ausführungsform des Gasstromregelventils ist bevorzugt vorgesehen, dass ein Umklappen der Membran mittels eines Stützelements verhindert ist. In einem geöffneten Zustand des Gasstromregelventils liegt die Membran nicht auf dem Stützelement auf und hat somit keinen Einfluss auf den Betrieb, wohingegen die Membran im geschlossenen Zustand bei Unterdruck, beispielsweise durch einen Lüfter bei einem Spülen des Gasventils auf dem Stützelement aufliegt. Beim Öffnen des Gasstromregelventils und/oder bei Beaufschlagung mit Unterdruck können somit vorteilhaft Schwingungen vermieden werden, die ein Startverhalten des Gasstromregelventils negativ beeinflussen können.

### Beschreibung eines Ausführungsbeispiels:

Weitere Merkmale sowie beschriebene Ausführungen der Erfindung sollen in den nachfolgenden Ausführungsbeispielen näher erläutert werden. Es zeigen dabei
- Fig. 1: eine Übersicht über eine Gasventileinheit in geschlossener Stellung,
- Fig. 2: eine Übersicht über eine Gasventileinheit in geöffneter Stellung,
- Fig. 3: eine Detailansicht auf ein Gasstromregelventil in geschlossener Stellung,
- Fig. 4: eine Detailansicht auf ein Gasstromregelventil in geöffneter Stellung und
- Fig. 5: eine vergrößerte Ansicht eines Ausschnitts des Gasstromregelventils mit Diffusor in geschlossener Stellung.

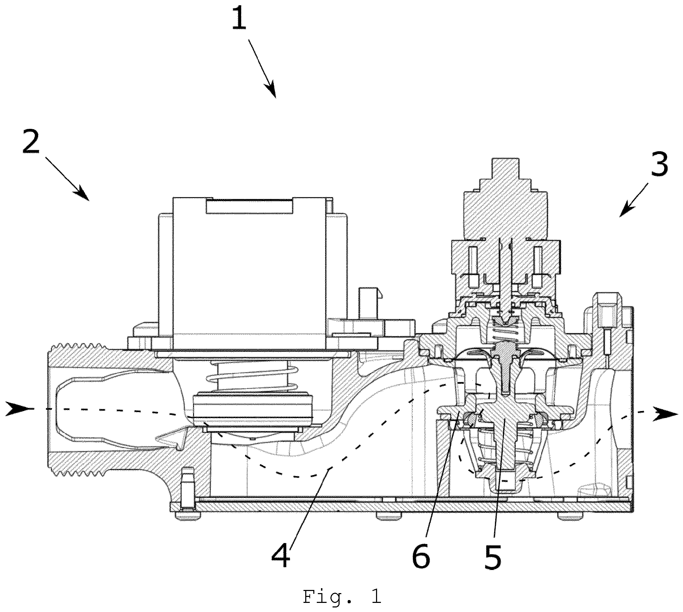

Figur 1 zeigt eine Übersicht über eine Gasventileinheit 1 in geschlossener Stellung, umfassend ein Sicherheitsventil 2, sowie ein Gasstromregelventil 3 zur Volumenstromregelung eines Gasstroms mit einem Gasströmungsverlauf 4.

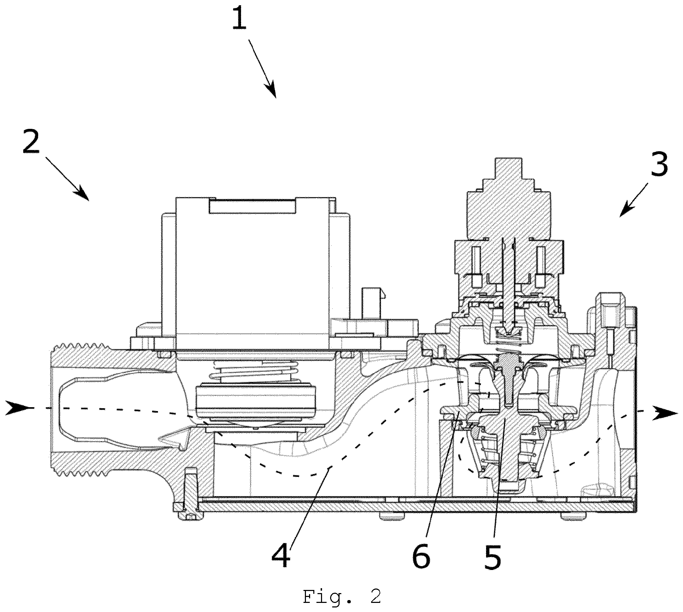

Figur 2 zeigt in Analogie zu Figur 1 eine Übersicht über die Gasventileinheit 1 in geöffneter Stellung, umfassend das Sicherheitsventil 2, sowie das Gasstromregelventil 3 zur Volumenstromregelung des Gasstroms mit dem Gasströmungsverlauf 4. In einer Zusammenschau der Figuren 1 und 2 ist dargestellt, dass das Gasstromregelventil 3 zur Regelung des Gasströmungsverlaufs 4 mittels eines Ventilkörpers 5, der sich relativ zu einem Ventilsitz 6 bewegt, geöffnet werden kann.

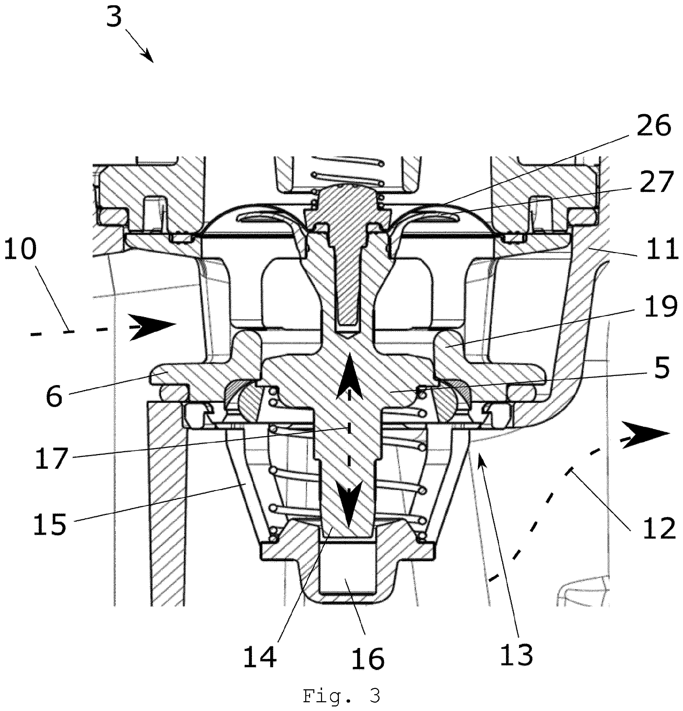

Fig. 3 zeigt eine Detailansicht des Gasstromregelventils 3 in geschlossener Stellung. Das Gasstromregelventil 3 umfasst ein Gehäuse 11 mit Gaseinlass 10, ein dem Ventilsitz 6 zugeordneten Ventilkörper 5, wobei der Ventilkörper 5 von einer Membran 26 gehalten ist. Ein Umklappen der Membran auf Grund von anstehenden Unterdrucks vor dem Öffnen des Sicherheitsventils wird mittels eines Stützelements 27 verhindert. Ein plötzlicher und durch das Öffnen des Sicherheitsventils auftretender Druckanstieg wirkt sich somit nicht negativ auf das Startverhalten aus und das Schwingungsverhalten wird reduziert. Ein homogener Strömungsverlauf kann dadurch schneller erreicht werden. Somit kann die Kapazität optimiert und eine Verminderung der Geräuschentwicklung erreicht werden.

Weiterhin ist dargestellt, dass ein dem Ventilsitz 6 nachgeordneten Führungskorb 15 in dem Gehäuse 11 und an dem Ventilsitz 6 ausgebildet ist und an dem Ventilkörper 5 ein Führungsschaft 14 ausgebildet ist, wobei der Führungsschaft 14 in mindestens einem Abschnitt des Führungskorbs 15 linear in Öffnungsrichtung des Ventils geführt ist und einen Dämpfer 16 für die Bewegung des Ventilkörpers 5 umfasst. Ein unerwünschtes Auslenken des Gasstromregelventils 3 sowohl in Axialrichtung, sowie Querrichtung kann dadurch verhindert werden, ohne dass das Regelverhalten beeinflusst würde. Zusätzlich kann der Dämpfer 16 Schwingungen in axialer Richtung reduzieren.

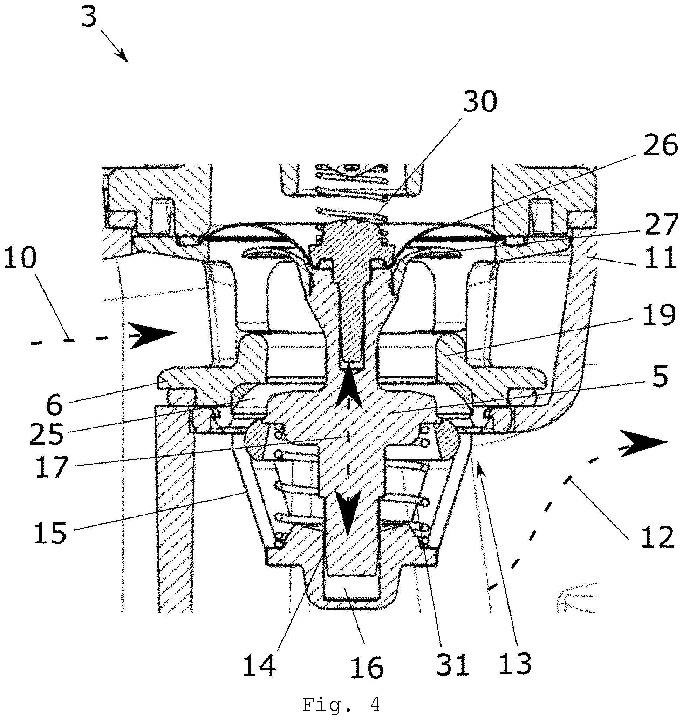

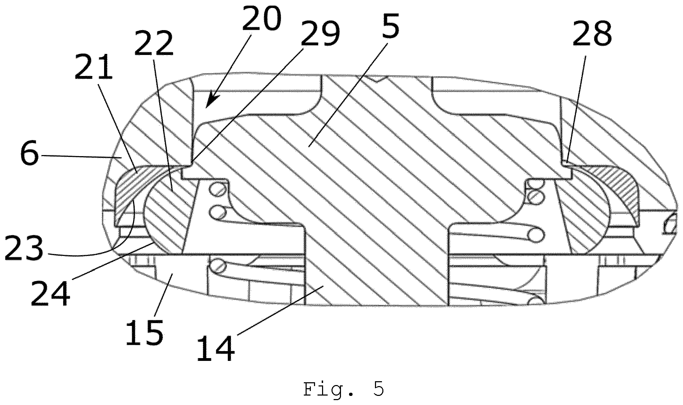

Figur 4 zeigt eine Detailansicht auf ein Gasstromregelventil 3 analog zu Figur 3 in geöffneter Stellung. Das Gasstromregelventil 3 umfasst einen dem Ventilkörper 5 nachgelagerten und in dem Gehäuse 11 vorgesehenen Gasauslass 12. Der Ventilkörper 5 in dem Ventilsitz 6 ist zur Ausbildung eines regelbaren Querschnitts einer Durchtrittsöffnung 25 für den Gasdurchtritt in einer ersten Bewegungsrichtung 17 beweglich angeordnet. Der Ventilkörper 5 wird hauptsächlich von einer oberen Feder 30 und einer unteren Feder 31 gehalten. Die Kraft der oberen Feder 30 und der unteren Feder 31 ist derart ausgelegt, dass der Ventilkörper in einer Ruhestellung gegen eine Anlegekante (in Figur 5 dargestellt) gedrückt wird. Vornehmlich dient die Membran 26 sowohl als Dichtung, als auch als Vermittlerin einer pneumatischen Kraft, die in Abhängigkeit des herrschenden Drucks den Ventilkörper 5 unterschiedlich stark nach oben drückt. Auf Grund der rotationssymmetrischen Form der Membran 26 wird dadurch der Ventilkörper 5 zusätzlich zentriert.

Weiterhin umfasst das Gasstromregelventil 3 einen verstellbaren Diffusor 13. Ein sich hierdurch veränderbarer Verlauf des sich öffnenden Querschnitts einer Durchtrittsöffnung 25 kann eine dadurch gegebene Druckregelung zur optimierten Durchströmung des Gasstromregelventils 3 ermöglichen, was für eine homogenere Durchströmung und einer Erhöhung der Kapazität des Gasstromregelventils 3 genutzt werden kann.

In einer Zusammenschau der Figuren 3 und 5 ist dargestellt, dass der verstellbare Diffusor 13 ein verstellbares Querschnittsverhalten mittels zweier sich voneinander entfernender, nicht linearer mit einem Offset in Öffnungsrichtung überlagerter Kurven, aufweist. Die Wirkung des Diffusors 13 kann dadurch zur Verbesserung der Strömungsführung optimiert werden. In Abhängigkeit von Ventilstellung und Betriebsdruck, bei gegebenen Durchflussströmungen, entsteht eine Kraft, die das Gasstromregelventil 3 öffnet, beziehungsweise schließt. Dies kann sich somit vorteilhaft auf das Regelverhalten des Gasstromregelventils 3 auswirken.

Weiterhin ist dargestellt, dass an dem Ventilsitz 6, vor der Durchtrittsöffnung 25 eine in Strömungsrichtung gleichförmige und hohlzylinderförmige Einlaufstrecke 19 ausgebildet ist. Die Durchtrittsöffnung 25 ist hierbei als Ringspalt ausgebildet. Eine homogenere Anströmung des Gasstromregelventils 3 kann somit ermöglicht werden, was eine Geräuschentwicklung reduzieren und eine Optimierung der Kapazität erreichen kann.

Fig. 5 zeigt eine vergrößerte Ansicht eines Ausschnitts des Gasstromregelventils 3 mit Diffusor 13 in geschlossener Stellung. In einer Zusammenschau mit Figur 4 ist dargestellt, dass das Gasstromregelventil 3 an dem Ventilsitz 6 im Bereich der Durchtrittsöffnung 25 (in Figur 4 dargestellt) eine Ventilsitz-Diffusorgeometrie 21 und an dem Ventilkörper 5 im Bereich der Durchtrittsöffnung 25 (in Fig. 4 dargestellt) eine Ventilkörper-Diffusorgeometrie 22 umfasst. Dies kann sich vorteilhaft auf die Strömungsführung und somit auf die Optimierung der Kapazität auswirken.

An einem Ventilsitz 6 ist an dem Grenzbereich zu der Durchtrittsöffnung 25 eine Bypassgeometrie 28, bevorzugt mehrere in gleichen Abständen umlaufende Bypassgeometrien (in Figur 5 dargestellt) ausgebildet. Ein definierter Durchfluss ist im geschlossenen Zustand möglich, der über eine Toleranzlage von Ventilkörper 5 und Ventilsitz 6 und anteiligem Querschnitt am Umfang einer Anlegekante 29 des Ventilkörpers 5 begrenzt ist. In vorteilhafter Weise kann dies das Auftreten eines Blendeneffekts vermeiden und die Kapazität und/oder die Geräuschentwicklung werden durch die Bypassgeometrie 28 nicht beeinflusst.

Weiterhin ist dargestellt, dass einerseits die Ventilsitz-Diffusorgeometrie 21 als Hohlkehle 23 und einstückig (nicht dargestellt) mit dem Ventilsitz 6 ausgebildet ist und andererseits die Ventilkörper Diffusorgeometrie 22 einstückig (nicht dargestellt) mit dem Ventilkörper 5 ausgebildet ist. Dies kann positiv zur Reduzierung der Kosten des Herstellungsprozesses genutzt werden. Die Ventilkörper-Diffusorgeometrie 21 ist weiterhin als Ringsegment mit konvexer und kreisförmiger Mantelkontur ausgebildet dargestellt, was die Nutzung unterschiedlicher abschnitte der Ventilkörper-Diffusorgeometrie 22 ermöglicht, sowohl als Führungselement für die Strömung des Gasstroms, als auch als Konturelement für die Ausbildung eines sich aufweitenden Querschnitssverlaufs der die Effekte des Diffusors 13 vermittelt. Die Ventilkörper-Diffusorgeometrie 22 mit der Ventilsitz-Diffusorgeometrie 21 bildet einerseits, in einem in Strömungsrichtung oberen Abschnitt, einen Strömungskanal aus und bildet andererseits, in einem in Strömungsrichtung folgenden unteren Abschnitt, eine Aufweitung zwischen den Radien einen Diffusorkanal aus. Eine gleichmäßige und ungestörte Anströmung des Diffusors 13 kann dadurch erzielt werden, was die Durchströmung begünstigt und eine homogenere Wirkung des Diffusors 13 erlaubt.

### Bezugszeichenliste:

- 1: Gasventileinheit
- 2: Sicherheitsventil
- 3: Gasstromregelventil
- 4: Gasströmungsverlauf
- 5: Ventilkörper
- 6: Ventilsitz
- 10: Gaseinlass
- 11: Gehäuse
- 12: Gasauslass
- 13: Diffusor
- 14: Führungsschaft
- 15: Führungskorb
- 16: Dämpfer
- 17: Bewegungsrichtung
- 19: Einlaufstrecke
- 20: Ringspalt
- 21: Ventilsitz-Diffusorgeometrie
- 22: Ventilkörper-Diffusorgeometrie
- 23: Hohlkehle
- 24: Ringsegment
- 25: Durchtrittsöffnung
- 26: Membran
- 27: Stützelement
- 28: Bypassgeometrie
- 29: Anlegekante
- 30: obere Feder
- 31: untere Feder

## Patentansprüche

1. Gasstromregelventil (3), wobei das Gasstromregelventil (3)
- ein Gehäuse (11) mit einem Gaseinlass (10),
- ein in dem Gehäuse (11) angeordneten Ventilsitz (6),
- ein dem Ventilsitz (6) zugeordneten Ventilkörper (5),
wobei der Ventilkörper (5) von einer oberen Feder (30) und einer unteren Feder (31) gehalten und mittels einer Membran (26) zentriert ist,
- sowie einen dem Ventilkörper (5) nachgelagerten, in dem Gehäuse (11) vorgesehenen Gasauslass (12) umfasst,
wobei der Ventilkörper (5) in dem Ventilsitz (6) zur Ausbildung eines regelbaren Querschnitts einer Durchtrittsöffnung (25) für den Gasdurchtritt in einer ersten Bewegungsrichtung (17) beweglich angeordnet ist,
wobei das Gasstromregelventil (3) einen verstellbaren Diffusor (13) umfasst,
**dadurch gekennzeichnet, dass**
an dem Ventilsitz (21) am Grenzbereich zu der Durchtrittsöffnung mindestens eine Bypassgeometrie (28) ausgebildet ist,
wobei die Bypassgeometrie (28) einen definierten Durchfluss des Gasstroms bei geschlossener Stellung ermöglicht, indem
der definierte Durchfluss über eine Toleranzlage von Ventilkörper (5) und Ventilsitz (6) und anteiligem Querschnitt am Umfang einer Anlegekante (29) des Ventilkörpers (5) begrenzt ist.

2. Gasstromregelventil (3) nach Anspruch 1, **dadurch gekennzeichnet, dass** an dem Ventilsitz (6) im Bereich der Durchtrittsöffnung (25) eine Ventilsitz-Diffusorgeometrie (21) und/oder an dem Ventilkörper (5) im Bereich der Durchtrittsöffnung (25) eine Ventilkörper-Diffusorgeometrie (22) umfasst ist.

3. Gasstromregelventil (3) nach Anspruch 1 oder 2, **dadurch gekennzeichnet, dass** der verstellbare Diffusor (13) sein verstellbares Querschnittsverhalten mittels zweier sich voneinander entfernender Kurven, insbesondere nicht linearer Kurven, bevorzugt überlagert mit einem Offset in Öffnungsrichtung, aufweist.

4. Gasstromregelventil (3) nach einem der vorangegangenen Ansprüche, **dadurch gekennzeichnet, dass** an dem Ventilsitz (6), vor der Durchtrittsöffnung (25) eine Einlaufstrecke (19), bevorzugt eine in Strömungsrichtung gleichförmige Einlaufstrecke (19), insbesondere eine hohlzylinderförmige Einlaufstrecke (19), ausgebildet ist.

5. Gasstromregelventil (3) nach einem der vorangegangenen Ansprüche, **dadurch gekennzeichnet, dass** die Durchtrittsöffnung (15) als Ringspalt ausgebildet ist.

6. Gasstromregelventil (3) nach einem der vorangegangenen Ansprüche 2 bis 5, **dadurch gekennzeichnet, dass** die Ventilsitz-Diffusorgeometrie (21) einstückig mit dem Ventilsitz (6) ausgebildet ist.

7. Gasstromregelventil (3) nach einem der vorangegangenen Ansprüche 2 bis 6, **dadurch gekennzeichnet, dass** die Ventilkörper-Diffusorgeometrie (22) einstückig mit dem Ventilkörper (5) ausgebildet ist.

8. Gasstromregelventil (3) nach einem der vorangegangenen Ansprüche 2 bis 7, **dadurch gekennzeichnet, dass** die Ventilsitz-Diffusorgeometrie (21) als Hohlkehle ausgebildet ist.

9. Gasstromregelventil (3) nach einem der vorangegangenen Ansprüche 2 bis 8, **dadurch gekennzeichnet, dass** die Ventilkörper-Diffusorgeometrie (22) als Ringsegment, insbesondere mit konvexer Mantelkontur, bevorzugt mit kreisförmiger Mantelkontur ausgebildet ist.

10. Gasstromregelventil (3) nach einem der vorangegangenen Ansprüche 2 bis 9, **dadurch gekennzeichnet, dass** die Ventilkörper-Diffusorgeometrie (22) mit der Ventilsitz-Diffusorgeometrie (21) in einem in Strömungsrichtung oberen Abschnitt einen Strömungskanal ausbildet und in einem in Strömungsrichtung folgenden unteren Abschnitt eine Aufweitung zwischen den Radien einen Diffusorkanal ausbildet.

11. Gasstromregelventil nach einem der vorangegangenen Ansprüche, **dadurch gekennzeichnet, dass** an dem Ventilsitz (21) am Grenzbereich zu der Durchtrittsöffnung mehrere in gleichen Abständen umlaufende Bypassgeometrien ausgebildet ist.

12. Gasstromregelventil (3) nach einem der vorangegangenen Ansprüche, **dadurch gekennzeichnet, dass** ein dem Ventilsitz (6) nachgeordneter Führungskorb (15) in dem Gehäuse (11), bevorzugt an dem Ventilsitz (6) oder einer Federaufnahme ausgebildet ist und an dem Ventilkörper (5) ein Führungsschaft (14) ausgebildet ist, wobei der Führungsschaft (14) in mindestens einem Abschnitt des Führungskorbs (15) linear in Öffnungsrichtung des Ventils geführt ist und insbesondere einen Dämpfer (16) für die Bewegung des Ventilkörpers (5) umfasst.

13. Gasstromregelventil (3) nach einem der vorangegangenen Ansprüche, **dadurch gekennzeichnet, dass** ein Umklappen der Membran (26) mittels eines Stützelements (27) verhindert ist.

## Claims

1. Gas flow control valve (3), wherein the gas flow control valve (3) comprises
- a housing (11) having a gas inlet (10);
- a valve seat (6) which is disposed in the housing (11) ;
- a valve body (5) which is assigned to the valve seat (6), wherein the valve body (5) is held by an upper spring (30) and a lower spring (31) and is centred by means of a diaphragm (26); and
- and a gas outlet (12) which is provided in the housing (11) so as to be downstream of the valve body (5);
wherein the valve body (5) is movably disposed in the valve seat (6) so as to form a controllable cross section of a passage opening (25) for gas to pass through in a first direction of movement (17); wherein the gas flow control valve (3) comprises an adjustable diffusor (13),
**characterized in that** at least one bypass geometry (28) is formed on the valve seat (21) at the boundary region towards the passage opening;
wherein the bypass geometry (28) in a closed position enables a defined flow of the gas flow **in that** the defined flow is delimited by a tolerance position of the valve body (5) and the valve seat (6) and a proportional cross section on the circumference of a contact edge (29) of the valve body (5).

2. Gas flow control valve (3) according to Claim 1, **characterized in that** a valve seat diffusor geometry (21) is comprised on the valve seat (6) in the region of the passage opening (25), and/or a valve body diffusor geometry (22) is comprised on the valve body (5) in the region of the passage opening (25).

3. Gas flow control valve (3) according to Claim 1 or 2, **characterized in that** the adjustable diffusor (13) has its adjustable cross-sectional behaviour by means of two mutually diverging curves, in particular non-linear curves, preferably superimposed by an offset in the opening direction.

4. Gas flow control valve (3) according to one of the preceding claims, **characterized in that** an inflow section (19), preferably an inflow section (19) which is uniform in the flow direction, in particular a hollow-cylindrical inflow section (19), is formed on the valve seat (6) ahead of the passage opening (25).

5. Gas flow control valve (3) according to one of the preceding claims, **characterized in that** the passage opening (15) is designed as an annular gap.

6. Gas flow control valve (3) according to one of preceding Claims 2 to 5, **characterized in that** the valve seat diffusor geometry (21) is formed integrally with the valve seat (6).

7. Gas flow control valve (3) according to one of preceding Claims 2 to 6, **characterized in that** the valve body diffusor geometry (22) is formed integrally with the valve body (5).

8. Gas flow control valve (3) according to one of preceding Claims 2 to 7, **characterized in that** the valve seat diffusor geometry (21) is formed as a fluting.

9. Gas flow control valve (3) according to one of preceding Claims 2 to 8, **characterized in that** the valve body diffusor geometry (22) is formed as a ring segment, in particular with a convex shell contour, preferably with a circular shell contour.

10. Gas flow control valve (3) according to one of preceding Claims 2 to 9, **characterized in that** the valve body diffusor geometry (22), conjointly with the valve seat diffusor geometry (21), in an upper portion in the flow direction forms a flow duct and, in a lower portion following in the flow direction, an enlargement between the radii forms a diffusor duct.

11. Gas flow control valve according to one of the preceding claims, **characterized in that** a plurality of bypass geometries which encircle the valve seat (21) at identical spacings are formed at the boundary region towards the passage opening.

12. Gas flow control valve (3) according to one of the preceding claims, **characterized in that** a guide cage (15), which is downstream of the valve seat (6), is formed in the housing (11), preferably on the valve seat (6) or a spring receptacle, and a guide shaft (14) is formed on the valve body (5), wherein the guide shaft (14) in at least one portion of the guide cage (15) is guided linearly in the opening direction of the valve, and in particular comprises a damper (16) for the movement of the valve body (5) .

13. Gas flow control valve (3) according to one of the preceding claims, **characterized in that** folding of the diaphragm (26) is prevented by means of a supporting element (27).

## Revendications

1. Soupape de régulation de courant de gaz (3), la soupape de régulation de courant de gaz (3) comprenant
- un boîtier (11) avec une entrée de gaz (10),
- un siège de soupape (6) agencé dans le boîtier (11),
- un corps de soupape (5) associé au siège de soupape (6),
le corps de soupape (5) étant maintenu par un ressort supérieur (30) et un ressort inférieur (31) et étant centré au moyen d'une membrane (26),
- ainsi qu'une sortie de gaz (12) prévue dans le boîtier (11), située en aval du corps de soupape (5),
le corps de soupape (5) étant agencé dans le siège de soupape (6) de manière mobile dans une première direction de déplacement (17) pour réaliser une section transversale ajustable d'une ouverture de passage (25) pour le passage de gaz,
la soupape de régulation de courant de gaz (3) comprenant un diffuseur réglable (13),
**caractérisée en ce**
**qu'**au moins une géométrie de dérivation (28) est réalisée sur le siège de soupape (21) au niveau de la zone limite avec l'ouverture de passage (20),
la géométrie de dérivation (28) permettant un écoulement défini du courant de gaz en position fermée, par le fait que l'écoulement défini est limité par l'intermédiaire d'une position de tolérance du corps de soupape (5) et du siège de soupape (6) et par une section transversale proportionnelle sur la périphérie d'un bord d'appui (29) du corps de soupape (5).

2. Soupape de régulation de courant de gaz (3) selon la revendication 1, **caractérisée en ce qu'**une géométrie de diffuseur de siège de soupape (21) est comprise sur le siège de soupape (6) dans la zone de l'ouverture de passage (25) et/ou une géométrie de diffuseur de corps de soupape (22) est comprise sur le corps de soupape (5) dans la zone de l'ouverture de passage (25).

3. Soupape de régulation de courant de gaz (3) selon la revendication 1 ou 2, **caractérisée en ce que** le diffuseur réglable (13) présente son comportement de section transversale réglable au moyen de deux cames qui s'écartent l'une de l'autre, notamment de cames non linéaires, de préférence superposées avec un décalage dans la direction d'ouverture.

4. Soupape de régulation de courant de gaz (3) selon l'une quelconque des revendications précédentes, **caractérisée en ce qu'**une section d'entrée (19), de préférence une section d'entrée (19) uniforme dans la direction d'écoulement, notamment une section d'entrée (19) en forme de cylindre creux, est réalisée sur le siège de soupape (6), avant l'ouverture de passage (25).

5. Soupape de régulation de courant de gaz (3) selon l'une quelconque des revendications précédentes, **caractérisée en ce que** l'ouverture de passage (15) est réalisée sous forme de fente annulaire.

6. Soupape de régulation de courant de gaz (3) selon l'une quelconque des revendications 2 à 5, **caractérisée en ce que** la géométrie de diffuseur de siège de soupape (21) est réalisée d'une seule pièce avec le siège de soupape (6).

7. Soupape de régulation de courant de gaz (3) selon l'une quelconque des revendications 2 à 6 précédentes, **caractérisée en ce que** la géométrie de diffuseur de corps de soupape (22) est réalisée d'une seule pièce avec le corps de soupape (5).

8. Soupape de régulation de courant de gaz (3) selon l'une quelconque des revendications 2 à 7, **caractérisée en ce que** la géométrie de diffuseur de siège de soupape (21) est réalisée sous forme de gorge creuse.

9. Soupape de régulation de courant de gaz (3) selon l'une quelconque des revendications 2 à 8, **caractérisée en ce que** la géométrie de diffuseur de corps de soupape (22) est réalisée sous forme de segment annulaire, notamment avec un contour d'enveloppe convexe, de préférence avec un contour d'enveloppe circulaire.

10. Soupape de régulation de courant de gaz (3) selon l'une quelconque des revendications précédentes 2 à 9, **caractérisée en ce que** la géométrie de diffuseur de corps de soupape (22) réalise avec la géométrie de diffuseur de siège de soupape (21) un canal d'écoulement dans une section supérieure dans la direction d'écoulement et, dans une section inférieure suivante dans la direction d'écoulement, un élargissement entre les rayons réalise un canal de diffuseur.

11. Soupape de régulation de courant de gaz selon l'une quelconque des revendications précédentes, **caractérisée en ce que** plusieurs géométries de dérivation circonférentielles équidistantes sont réalisées sur le siège de soupape (21) au niveau de la zone limite avec l'ouverture de passage.

12. Soupape de régulation de courant de gaz (3) selon l'une quelconque des revendications précédentes, **caractérisée en ce qu'**un panier de guidage (15) situé en aval du siège de soupape (6) est réalisé dans le boîtier (11), de préférence sur le siège de soupape (6) ou sur un logement de ressort, et une tige de guidage (14) est réalisée sur le corps de soupape (5), la tige de guidage (14) étant guidée linéairement dans la direction d'ouverture de la soupape dans au moins une section du panier de guidage (15) et comprenant notamment un amortisseur (16) pour le déplacement du corps de soupape (5) .

13. Soupape de régulation de courant de gaz (3) selon l'une quelconque des revendications précédentes, **caractérisée en ce qu'**un rabattement de la membrane (26) est empêché au moyen d'un élément de support (27).
